# DEMANDE DE BREVET EUROPEEN

(11) **EP 1 785 363 A1**
(43) Date de publication de la demande: **16.05.2007**
(21) Numéro de dépôt: 06301132.4
(22) Date de dépôt: 08.11.2006
(51) Int. Cl.: B65D 33/00

(54) **Procédé de fabrication en continu d'un sac à partir d'un film en matière plastique souple et le sac obtenu.**

(30) Priorité: 09.11.2005 FR 0553391
(71) Demandeur: AUTOBAR FLEXIBLE PACKAGING, 43290 Montfaucon En Velay (FR)
(72) Inventeur: Alaux, Patrick, 42240 Unieux (FR)
(74) Mandataire: Thivillier, Patrick

(57) **Abrégé**

Procédé de fabrication en continu d'un sac à partir d'un film en matière plastique souple et le sac obtenu.

Le sac d'emballage est obtenu à partir d'un film en matière plastique souple.

Il présente sur au moins l'une de ses faces (1a) au moins une empreinte en relief (1f).

## Description

L'invention se rattache au secteur technique des sacs d'emballage.

Plus particulièrement, l'invention concerne les sacs d'emballage réalisés en matière synthétique ou en matière plastique.

D'une manière parfaitement connue pour un homme du métier, ces sacs peuvent être réalisés à partir d'une gaine ou d'un film en matière plastique qui peut, par exemple, être du PE laminé avec de l'OPP ou bien du PE laminé avec du PET. Les sacs obtenus présentent généralement une extrémité fermée constituant un fond, tandis que l'autre extrémité est ouverte, en étant susceptible de coopérer avec des moyens pour fermer à volonté le sac, d'une manière étanche ou non. La partie supérieure du sac peut être équipée d'un moyen apte à créer une ouverture temporaire donnant libre accès à l'intérieur du sac, et susceptible d'être refermée et réouverte à volonté. Pour augmenter la capacité du sac, des soufflets latéraux peuvent être formés symétriquement, à partir d'une ligne de pliage. Les soufflets sont réalisés lors de la fabrication des sacs par tout moyen connu et approprié.

Il en résulte que les différentes étapes nécessaires à la conformation du sac sont réalisées en continu sur une ligne de fabrication présentant différents postes correspondant à une opération spécifique. Ce type d'installation peut permettre d'obtenir des cadences de production élevées. A titre indicatif, nullement limitatif, il est possible d'obtenir 50 à 60 sacs par minute.

Généralement, le film en matière plastique utilisé est préalablement imprimé afin de présenter aux consommateurs différentes indications visuelles, telles que dessins, figurines ou logos, afin de proposer un produit attractif parfaitement identifiable. Par contre, tous les marquages réalisés quel que soit le mode d'application et/ou d'impression, apparaissent à plat.

A partir de cet état de la technique, dans le cas d'un procédé de fabrication en continu de sacs obtenus à partir d'un film en matière plastique souple, le problème que se propose de résoudre l'invention est de créer, sur l'une des faces au moins du sac, un effet visuel afin de rendre le sac parfaitement identifiable et particulièrement attractif aux yeux des consommateurs et distinctifs par rapport à des sacs concurrents.

Pour résoudre un tel problème, il a été conçu et mis au point un sac d'emballage obtenu à partir d'un film en matière plastique souple. Selon l'invention, le sac présente sur au moins l'une de ses faces au moins une empreinte en relief. L'empreinte en relief est obtenue par une opération de thermoformage d'une partie du film correspondant à la ou aux face(s).

L'opération de thermoformage s'effectue par tout moyen parfaitement connu et approprié pour un homme du métier et couramment utilisé dans des domaines d'application autres que la réalisation de sacs en matière plastique souple. Généralement, ces opérations de thermoformage sont réalisées à partir de matière plastique rigide ou semi-rigide.
Par contre, il n'était pas évident d'appliquer un procédé de thermoformage à un film en matière plastique souple, lorsque cette matière est destinée à être soumise, après l'opération de thermoformage en tant que telle, à une pluralité d'autres opérations, comme c'est le cas dans un procédé de fabrication en continu de sacs en matière plastique. En effet, on rappelle que le thermoformage consiste à former, au moyen d'un moule, une feuille de plastique ramollie par chauffage. La feuille ainsi formée épouse la forme du moule et, en refroidissant, conserve sa forme. Or, dans le cas d'un procédé de fabrication en continu de sacs en matière plastique, après avoir thermoformé une partie du film, cette partie va être soumise à différentes contraintes mécaniques et notamment d'étirement, de pression,... L'homme du métier est donc dissuadé d'utiliser le principe de thermoformage, étant donné que des risques paraissent importants de ne pas pouvoir conserver la forme de la partie du film soumise à l'opération de thermoformage.

L'invention concerne également le procédé selon lequel on réalise une opération de thermoformage sur une partie du film en amont d'autres opérations nécessaires à la réalisation en automatique du sac.

Avantageusement :
- on déroule une bobine de film en matière plastique;
- on soumet le film, au fur et à mesure de son déroulement :
   - à une opération de thermoformage correspondant à la ou aux empreinte(s) en relief ;
   - à différentes opérations successives :
      - pour obtenir un sac présentant deux parois dont l'une au moins présente la ou les empreintes ;
      - pour réunir les parois et des bords latéraux, avec ou non formation de soufflets ;
      - pour constituer un fond ;
      - pour réaliser une ouverture d'accès équipée ou non de moyens de fermeture.

Pour résoudre le problème posé de conserver la forme résultant de l'opération de thermoformage, l'opération de thermoformage est réalisée à une température comprise entre 60°C et 130°C et avantageusement entre 80°C et 90°C.

L'invention est exposée ci-après plus en détail à l'aide des figures des dessins annexés dans lesquels :
- la figure 1 est une vue en perspective d'une forme de réalisation d'un sac en matière plastique dont l'une des faces présente un effet de gaufrage résultant de la formation d'une empreinte en relief ;
- la figure 2 est une vue en coupe à caractère schématique considérée selon la ligne 2-2 de la figure 1 ;
- la figure 3 est un schéma, à titre indicatif nullement limitatif, d'un procédé de fabrication de sacs en continu incluant un poste de thermoformage selon l'invention.

L'invention s'applique à tout type de sacs en matière plastique (1) obtenus par tout moyen connu et approprié. Par exemple, les sacs peuvent être obtenus à partir d'une bobine d'un film (F) en matière plastique souple soumise en continu, à différentes opérations, notamment de pliage, de soudure, réalisées de manière automatique. La matière plastique utilisée peut être, par exemple, du PE laminé avec de l'OPP ou bien du PE laminé avec du PET.

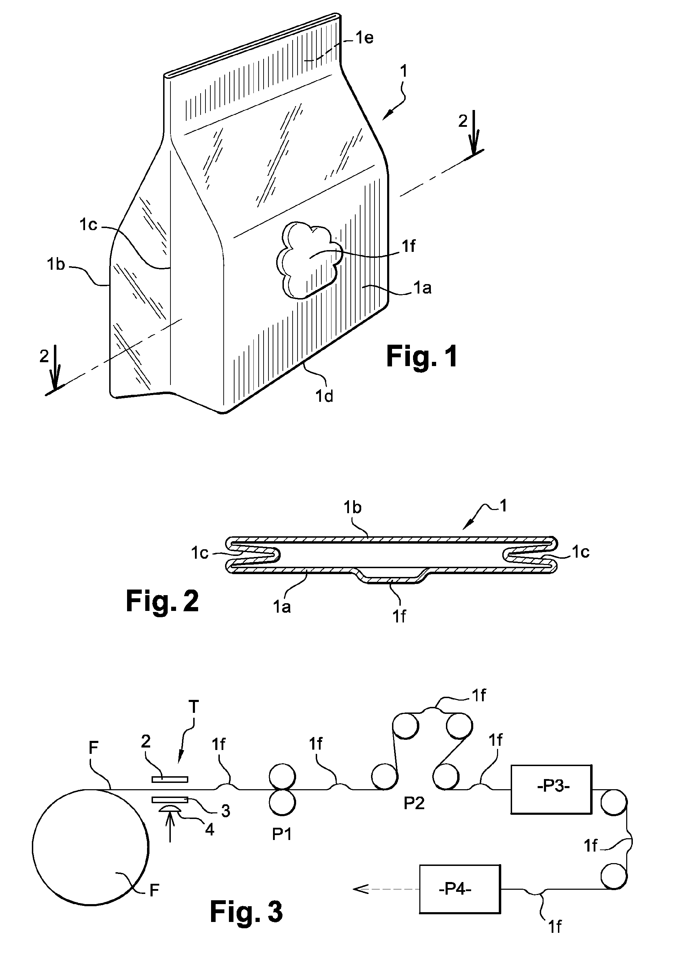

On a illustré, figure 3, à titre indicatif nullement limitatif, à caractère purement schématique, une ligne de fabrication en continu de sacs à partir d'une bobine de film plastique (F). Cette ligne de fabrication comprend une pluralité de postes (P1), (P2), (P3), (P4), etc... conformés pour réalisé une partie spécifique du sac. Notamment, les différents postes P1), (P2), (P3), (P4), etc... sont agencés pour permettre d'obtenir, à la sortie de l'installation en continu, un sac présentant deux parois (1a) et (1b) définies par des bords latéraux (1c) et (1d) susceptibles d'être conformés en soufflets en combinaison avec un fond (1d). A l'opposé du fond (1d), le sac (1) présente une ouverture (1e) en étant susceptible d'être assujetti à tout moyen apte à créer une ouverture temporaire donnant libre accès à l'intérieur du sac, cette ouverture pouvant être refermée et réouverte à volonté. De telles dispositions ne sont pas décrites en détail, car parfaitement connues pour un homme du métier.

Selon une caractéristique à la base de l'invention, une partie du sac (1), par exemple la face (1a) présente, au moins, une zone en relief (F) faisant office de gaufrage. Cette partie en relief (1f) est obtenue par un procédé de thermoformage (T) apte à assurer une déformation permanente du film en matière plastique (f). Par exemple, le poste de thermoformage met en oeuvre deux plaques chauffantes (2) et (3) en combinaison avec une contreforme (4) correspondant à la partie en relief souhaitée (1f). Une aspiration sous vide peut, si nécessaire, avantageusement compléter le poste de thermoformage.

Selon l'invention, le poste de thermoformage (T) est disposé sur une partie de l'installation en continu pour la fabrication des sacs, en amont des différents postes de conformation (P1), (P2), (P3), (P4), etc... (figure 3). Il en résulte donc que la forme en relief (1f) est soumise successivement aux différents postes de conformation (P1), (P2), (P3), (P4), etc...
A cet égard, pour permettre à la partie en relief (1f) de conserver sa forme initiale tout au long du process de fabrication, et au niveau du sac obtenu, il est nécessaire de réaliser l'opération de thermoformage dans certaines plages de température. Notamment des essais ont démontré qu'une opération de thermoformage réalisée dans des fourchettes de température comprise entre 60°C et 130°C, donnent des résultats satisfaisants. Notamment, des résultats avantageux sont obtenus pour une température de thermoformage entre 80°C et 90°C.

Bien évidemment, sans pour cela sortir du cadre de l'invention, plusieurs parties constitutives du sac peuvent présenter au moins une empreinte en relief constituant une zone de gaufrage.

Les avantages ressortent bien de la description. En particulier, on souligne et on rappelle :
- l'effet visuel obtenu et le caractère attractif et distinctif résultant de la présence d'une ou plusieurs zones en relief avec effet de gaufrage correspondant à une figurine, un logo, un marquage ;
- la qualité du résultat obtenu malgré le fait que ces zones en relief sont soumises à différentes contraintes mécaniques (étirement, pression, ...) correspondant aux différents postes de conformation pour la fabrication en continu des sacs en matière plastique.

## Revendications

1. Procédé de fabrication en continu d'un sac à partir d'un film en matière plastique souple, **caractérisé en ce que** :
- on déroule une bobine de film en matière plastique (F);
- on soumet le film (F), au fur et à mesure de son déroulement et successivement :
- à une opération de thermoformage (T) pour la réalisation sur une partie du film seulement d'au moins une empreinte en relief (1f) ;
- à différentes opérations successives (P1), (P2), (P3), (P4), etc...
• pour obtenir un sac présentant deux parois dont l'une au moins présente la ou les empreintes ;
• pour réunir les parois et des bords latéraux, avec ou non formation de soufflets ;
• pour constituer un fond ;
• pour réaliser une ouverture d'accès équipée ou non de moyens de fermeture.

2. Procédé selon la revendication 1, **caractérisé en ce que** l'opération de thermoformage est réalisée à une température comprise entre 60°C et 130°C et avantageusement entre 80°C et 90°C.

3. Sac obtenu par la mise en oeuvre du procédé selon l'une quelconque des revendications 1 à 2, ledit sac présentant sur au moins l'une de ses faces, au moins une empreinte en relief.
